Europäisches Patentamt

European Patent Office

Office européen des brevets

(11) Veröffentlichungsnummer: **0 443 393 A1**

(12) **EUROPÄISCHE PATENTANMELDUNG**

(21) Anmeldenummer: **91101834.9**

(22) Anmeldetag: **09.02.91**

(51) Int. Cl.⁵: **C08L 25/04**, C08J 9/14,
//(C08L25/04,81:02)

(30) Priorität: **17.02.90 DE 4005164**

(43) Veröffentlichungstag der Anmeldung:
**28.08.91 Patentblatt 91/35**

(84) Benannte Vertragsstaaten:
**BE DE FR GB IT NL SE**

(71) Anmelder: **BASF Aktiengesellschaft**
**Carl-Bosch-Strasse 38**
**W-6700 Ludwigshafen(DE)**

(72) Erfinder: **Weber, Reinhold**
**An der Steinernen Brücke 11**
**W-6704 Mutterstadt(DE)**
Erfinder: **Alicke, Gerhard**
**Brunnerstrasse 11**
**W-6520 Worms 1(DE)**
Erfinder: **Weilbacher, Manfred, Dr.**
**Taunusstrasse 27**
**W-6710 Frankenthal(DE)**
Erfinder: **Guhr, Uwe, Dr.**
**Beim Hochgericht 9**
**W-6718 Grünstadt(DE)**
Erfinder: **Hahn, Klaus, Dr.**
**Im Bügen 9**
**W-6719 Kirchheim(DE)**

(54) **Schaumstoffplatten mit hoher Wärmeformbeständigkeit.**

㊼ Schaumstoffplatten mit hoher Wärmeformbeständigkeit enthalten a) 80 bis 99 Gew.-% eines Styrolpolymerisats und b) 1 bis 20 Gew.-% Poly-1,4-phenylensulfid sowie gegebenenfalls übliche Zusatzstoffe. Ihre Herstellung erfolgt durch Extrusion unter Verwendung eines niedrig siedenden Treibmittels.

Rank Xerox (UK) Business Services

Gegenstand der Erfindung sind Schaumstoffplatten mit hoher Wärmeformbeständigkeit auf der Basis eines Gemisches aus einem Styrolpolymerisat und Poly-1,4-phenylensulfid.

Schaumstoffplatten auf Basis von Polystyrol, die durch Extrusion eines Polystyrol-Treibmittel-Gemisches hergestellt werden, haben als Wärmedämmstoff insbesondere in der Bauindustrie eine große technische Bedeutung erlangt. Nachteilig ist allerdings ihre mangelhafte Wärmeformbeständigkeit, die einem Einsatz beispielsweise zur Dachisolation in Gegenden mit hoher Sonneneinstrahlung entgegensteht.

Aufgabe der Erfindung war es, die Wärmeformbeständigkeit von Polystyrol-Schaumstoffplatten zu erhöhen. Weiterhin war es Aufgabe der Erfindung, eine geringe Wasseraufnahme und eine hohe Druckfestigkeit der Platten sicherzustellen.

Die Aufgaben der Erfindung werden überraschenderweise gelöst durch Schaumstoffplatten auf Basis eines Gemisches aus einem Styrolpolymerisat und Poly-1,4-phenylensulfid.

Gegenstand der Erfindung sind somit Schaumstoffplatten mit hoher Wärmeformbeständigkeit enthaltend

a) 80 bis 99 Gew.-% eines Styrolpolymerisats,

b) 1 bis 20 Gew.-% Poly-1,4-phenylensulfid,

sowie gegebenenfalls

c) übliche Zusatzstoffe in wirksamen Mengen,

wobei die Platten

d) eine Dicke von 10 bis 200 mm,

e) eine Dichte von 20 bis 50 kg/m$^3$,

f) zumindest 90% geschlossene Zellen,

g) einen mittleren Zelldurchmesser von 0,05 bis 0,5 mm und

h) eine Wasseraufnahme von weniger als 1 Vol.-%

aufweisen.

Gegenstand der Erfindung ist ferner ein Verfahren zur Herstellung derartiger Schaumstoffplatten, das dadurch gekennzeichnet ist, daß man das Styrolpolymerisat mit dem Poly-1,4-phenylensulfid und 7 bis 16 Gew.-%, bezogen auf die Summe von a) und b), eines niedrig siedenden Treibmittels sowie gegebenenfalls üblichen Zusatzstoffen in einem Extruder bei Temperaturen zwischen 100 und 200 °C innig vermischt, das Gemisch anschließend durch eine Beruhigungszone führt, mit einer Austrittstemperatur zwischen 100 und 130 °C durch eine Breitschlitzdüse extrudiert und den entstehenden Schaum durch einen Formgebungskanal führt.

Die Schaumstoffplatten gemäß der Erfindung enthalten als Komponente a) 80 bis 99 Gew.-%, vorzugsweise 82 bis 98 Gew.-%, insbesondere 85 bis 95 Gew.-% eines Styrolpolymerisats.

Styrolpolymerisate im Sinne dieser Erfindung sind Polystyrol und Mischpolymerisate des Styrols, die mindestens 50 Gew.-%, vorzugsweise mindestens 80 Gew.-% Styrol einpolymerisiert enthalten. Als Comonomere kommen z.B. in Betracht α-Methylstyrol, kernhalogenierte Styrole, kernalkylierte Styrole, Acrylnitril, Ester der (Meth)acrylsäure von Alkoholen mit 1 bis 8 C-Atomen, N-Vinylverbindungen, wie Vinylcarbazol, Maleinsäureanhydrid oder auch geringe Mengen an Verbindungen, die zwei polymerisierbare Doppelbindungen enthalten, wie Butadien, Divinylbenzol oder Butandioldiacrylat.

Die Schaumstoffplatten enthalten als Komponente b) 1 bis 20 Gew.-%, vorzugsweise 2 bis 18 Gew.-%, insbesondere 5 bis 15 Gew.-% Poly-1,4-phenylensulfid .

Die Mischung der Komponenten a) und b) hat im allgemeinen einen Schmelzindex, gemessen nach DIN 53735 (MFI 200/5) von 0,1 bis 20, vorzugsweise von 0,3 bis 7,0, insbesondere von 0,5 bis 5,0.

Als übliche Zusatzstoffe können die Schaumstoffplatten gegebenenfalls Antistatika, Stabilisatoren, Farbstoffe, Pigmente, Schmiermittel, Füllstoffe, Keimbildner, Flammschutzmittel und/oder Synergisten in üblichen Mengen enthalten. Als Flammschutzmittel wird vorzugsweise Hexabromcyclododecen in einer Menge von 0,5 bis 3 Gew.-%, vorzugsweise 0,7 bis 2 Gew.-% verwendet. Ein bevorzugter Synergist ist Dicumyl in einer Menge von 0,05 bis 0,5 Gew.-%.

Die Schaumstoffplatten sind ferner dadurch charakterisiert, daß sie zumindest 90%, vorzugsweise zumindest 95% geschlossene Zellen aufweisen. In den Zellen kann gasförmig das bei der Herstellung verwendete Treibmittel enthalten sein, soweit dies nicht bei der Lagerung der Platten durch Diffusion in die Umgebungsatmosphäre entweicht.

Der mittlere Zelldurchmesser beträgt im allgemeinen 0,05 bis 0,5 mm, vorzugsweise 0,1 bis 0,2 mm.

Die erfindungsgemäßen Schaumstoffplatten sind ferner charakterisiert durch ein Wasseraufnahmevermögen von weniger als 1 Vol.-%, vorzugsweise weniger als 0,3 Vol.-%.

Die erfindungsgemäßen Platten weisen im allgemeinen, bedingt durch das Extrusionsverfahren, eine dichte Schäumhaut auf. Die Wärmeleitzahl (λ-Wert) liegt im allgemeinen zwischen 0,0240 und 0,0300 W/mK, vorzugsweise zwischen 0,0245 und 0,0285 W/mk. Die Druckspannung liegt im allgemeinen zwischen 0,200 und 0,500 N/mm², insbesondere zwischen 0,250 und 0,420 N/mm². Die Wärmeformbeständigkeit bei 85° C beträgt im allgemeinen 0 bis 3%, vorzugsweise 0 bis 1%.

Die Herstellung der erfindungsgemäßen Platten erfolgt in an sich bekannter Weise durch Extrusion eines Gemisches aus den Polymeren, einem niedrig siedenden Treibmittel sowie gegebenenfalls üblichen Zusatzstoffen.

Als Treibmittel werden die üblichen niedrig siedenden physikalischen Treibmittel verwendet, die Styrolpolymerisate nicht lösen, jedoch in der Polymerisatschmelze unter Druck löslich sind. Geeignet sind beispielsweise $C_3$-$C_5$-Kohlenwasserstoffe, wie Propan, n-Butan, n-Pentan, i-Pentan, Neopentan und deren Gemische, Chlorkohlenwasserstoffe, wie Methylchlorid und/oder Ethylchlorid, Fluorchlorkohlenwasserstoffe, wie Dichlordifluormethan und/oder 1,1-Difluor-1-chlorethan sowie Kohlendioxid. Vorzugsweise werden als Treibmittel Gemische der genannten Verbindungen verwendet. Die optimale Zusammensetzung der Gemische läßt sich leicht durch Vorversuche ermitteln. Das Treibmittel wird im allgemeinen in Mengen zwischen 7 und 16 Gew.-%, vorzugsweise 10 bis 14 Gew.-%, bezogen auf das PolymerisatGemisch verwendet.

Die innige Vermischung der Komponenten erfolgt in einem Extruder bei Temperaturen etwa zwischen 120 und 200° C. Anschließend wird das Gemisch durch eine Beruhigungszone geführt, wo es unter Rühren auf etwa 100 bis 130° C abgekühlt und mit einer Austrittstemperatur von etwa 100 bis 130° C durch eine Breitschlitzdüse extrudiert wird. Der entstehende Schaum wird durch einen Formgebungskanal geführt. Die so entstandenen Schaumstoffbahnen werden anschließend besäumt, gegebenenfalls mit einem Nut- und Feder-Profil versehen und abgelängt.

Die in den Beispielen beschriebenen Teile sind Gewichtsteile.

## Beispiel 1

100 Teile eines Gemisches aus 95 Gew.-% Polystyrol und 5 Gew.-% Poly-1,4-phenylensulfid (PPS) mit einem Schmelzindex (MFI 200/5) von 4,5, 0,1 Teile Talkum als Keimbildner zur Regelung der Zellgröße, 0,76 Teile Hexabromcyclododecan und 0,15 Teile 2,3-Diphenyl-2,4-dimethylbutan werden einem Extruder mit einem inneren Schneckendurchmesser von 120 mm kontinuierlich zugeführt. Durch eine in den Extruder angebrachte Einlaßöffnung wird gleichzeitig ein Treibmittelgemisch aus 1,9 Teilen Ethylchlorid und 14 Teilen Dichlordifluormethan kontinuierlich eingedrückt. Das in dem Extruder bei 180° C gleichmäßig geknetete Gel wird durch eine Beruhigungszone geführt und nach einer Verweilzeit von 15 Minuten mit einer Austrittstemperatur von 110° C durch eine 300 mm breite und 1,5 mm weite Düse in die Atmosphäre extrudiert. Der Schaum wird durch einen mit dem Extruder verbundenen Formkanal geführt, wobei eine geschäumte Plattenbahn mit einem Querschnitt 650 mm x 50 mm entsteht.

Das Produkt wurde in Platten von 600 x 50 x 1250 mm³ geschnitten. Geprüft wurden die Proben nach einer Ablagerungszeit von 30 Tagen, der λ-Wert (Wärmeleitzahl) nach DIN 52612, die Schaumstoffdichte nach DIN 53420, die Zellgröße nach ASTM D 33842-69, die Geschlossenzelligkeit nach DIN-ISO 4590, die Wasseraufnahme aus ganzen Platten nach DIN 53434, die Druckspannung nach DIN 53421 und die Wärmeformbeständigkeit bei 85° C nach DIN 53431.

Zur Bestimmung der Nachbrennzeit wurde folgender Flammtest durchgeführt:

Eine 20 mm dicke Plattenprobe, die aus er Mitte der zu prüfenden Platte geschnitten ist, wurde an der Längsseite 10 mal mit einer 5 cm langen Propanflamme beflammt. Die bis zum Erlöschen gemessenen Nachbrennzeiten dieser 10 Tests wurden gemittelt. Dieser Wert gilt als Nachbrennzeit.

## Beispiel 2

Es wurde wie in Beispiel 1 gearbeitet, jedoch 100 Teile eines Gemisches aus 90 Gew.-% Polystyrol und 10 Gew.-% PPS verwendet. Die Mischtemperatur betrug 180° C, die Düsenaustrittstemperatur 112° C.

## Beispiel 3

Es wurde wie in Beispiel 1 gearbeitet, jedoch 100 Teile eines Gemisches aus 85 Gew.-% Polystyrol und 15 Gew.-% PPS verwendet. Die Mischtemperatur betrug 180° C, die Düsenaustrittstemperatur 115° C.

## Beispiel A (Vergleich)

Es wurde wie in Beispiel 1 gearbeitet, jedoch 100 Teile Polystyrol verwendet. Die Mischtemperatur betrug 180° C, die Düsenaustrittstemperatur 105° C.

Die Ergebnisse der Beispiele sind in der Tabelle zusammengefaßt.

Tabelle

| Bei-spiel | Geschlossen-zelligkeit % | Wasser-aufnahme V % | Dichte kg/m³ | Nach-brenn-zeit sec | Druckspannung N/mm² | | | Zellzahl Z/mm | | | Wärmeformbeständigkeit bei 85° | | |
|---|---|---|---|---|---|---|---|---|---|---|---|---|---|
| | | | | | s Richtung | l Richtung | q Richtung | s Richtung | l Richtung | q Richtung | s Richtung % | l Richtung % | q Richtung % |
| A | 97,3 | 0,085 | 33,9 | 0,8 | 0,326 | 0,248 | 0,172 | 6,5 | 8,5 | 7,4 | +0,46 | +0,85 | +5,32 |
| 1 | 96,9 | 0,12 | 35,9 | 1,9 | 0,364 | 0,275 | 0,203 | 7,8 | 8,6 | 10,1 | +0,09 | +0,74 | +1,98 |
| 2 | 98,5 | 0,090 | 41,6 | 7,1 | 0,438 | 0,362 | 0,246 | 7,1 | 9,3 | 9,6 | +0,03 | +0,13 | +0,83 |
| 3 | 97,1 | 0,13 | 44,0 | 8,5 | 0,426 | 0,456 | 0,312 | 6,8 | 6,8 | 8,3 | +0,00 | +0,00 | +0,41 |

## Patentansprüche

1. Schaumstoffplatten mit hoher Wärmeformbeständigkeit enthaltend

a) 80 bis 99 Gew.-% eines Styrolpolymerisats,

b) 1 bis 20 Gew.-% Poly-1,4-phenylensulfid,

sowie gegebenenfalls

c) übliche Zusatzstoffe in wirksamen Mengen,

wobei die Platten

d) eine Dicke von 10 bis 200 mm,

e) eine Dichte von 20 bis 50 kg/m$^3$,

f) zumindest 90% geschlossene Zellen,

g) einen mittleren Zelldurchmesser von 0,05 bis 0,5 mm und

h) eine Wasseraufnahme von weniger als 1 Vol.-%

aufweisen.

2. Verfahren zur Herstellung von Schaumstoffplatten gemäß Anspruch 1, dadurch gekennzeichnet, daß man das Styrolpolymerisat mit dem Poly-1,4-phenylensulfid und 7 bis 16 Gew.-%, bezogen auf die Summe von a) und b), eines niedrig siedenden Treibmittels sowie gegebenenfalls üblichen Zusatzstoffen in einem Extruder bei Temperaturen zwischen 120 und 200°C innig vermischt, das Gemisch anschließend durch eine Beruhigungszone führt, mit einer Austrittstemperatur zwischen 100 und 130°C durch eine Breitschlitzdüse extrudiert und den entstehenden Schaum durch einen Formgebungskanal führt.

Europäisches
Patentamt

EUROPÄISCHER
RECHERCHENBERICHT

Nummer der Anmeldung

EP 91 10 1834

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN, Band 13, Nr. 36, 30. Mai 1989; <br> & JP-A-1 045 438 (KUREHA CHEM. IND.) 17-02-1989 <br> * Zusammenfassung * <br> – – – | 1 | C 08 L 25/04 <br> C 08 J 9/14 // <br> (C 08 L 25/04 <br> C 08 L 81:02 ) |
| A | EP-A-0 343 473 (BASF) <br> * Seite 3, Zeilen 9-25; Ansprüche 1-5 * <br> – – – – | 1-2 | |

| RECHERCHIERTE SACHGEBIETE (Int. Cl.5) |
|---|
| C 08 J <br> C 08 L |

Der vorliegende Recherchenbericht wurde für alle Patentansprüche erstellt

| Recherchenort | Abschlußdatum der Recherche | Prüfer |
|---|---|---|
| Den Haag | 07 Mai 91 | SIEMENS T. |